(19) Europäisches Patentamt

European Patent Office

Office européen des brevets

(11) **EP 4 732 677 A2**

(12) **EUROPEAN PATENT APPLICATION**

(43) Date of publication:
**29.04.2026 Bulletin 2026/18**

(21) Application number: **26158799.2**

(22) Date of filing: **23.06.2021**

(51) International Patent Classification (IPC):
**A23L 11/65** (2025.01)

(52) Cooperative Patent Classification (CPC):
**A23L 11/50; A23L 11/60; A23L 11/65;** A23C 11/10;
A23C 11/106

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.06.2020 EP 20182109**

(62) Document number(s) of the earlier application(s) in
accordance with Art. 76 EPC:
**21735684.9 / 4 171 247**

(71) Applicant: **Société des Produits Nestlé S.A.
1800 Vevey (CH)**

(72) Inventors:
• **ANANTA, Edwin**
**1066 Epalinges (CH)**
• **BIEHL, Jan**
**3600 THUN (CH)**
• **DENG, Yuxi**
**3014 Bern (CH)**
• **LIANG, Youyun**
**618802 Singapore (SG)**
• **MERZ, Michael**
**3008 Bern (CH)**
• **WIDMER, Christoph, Thomas**
**3122 Kehrsatz (CH)**

(74) Representative: **Ly, Camille
Société des Produits Nestlé S.A.
Avenue Nestlé 55
1800 Vevey (CH)**

Remarks:
This application was filed on 16-02-2026 as a
divisional application to the application mentioned
under INID code 62.

(54) **METHOD FOR THE TREATMENT OF PROTEIN-CONTAINING COMPOSITIONS**

(57) The present invention relates to a method for treatment of a plant-based protein-containing composition comprising the steps of subjecting the protein-containing composition to a protein-deamidase treatment and to high-pressure homogenization. The invention further concerns a plant-based protein-containing composition that can be obtained by the inventive method as well as the use of the plant-based protein-containing composition obtained by the inventive method as a food, a food additive, or a starting material for the production of food.

**EP 4 732 677 A2**

Description

## TECHNICAL FIELD

The present invention relates to the method for treatment of a plant-based protein-containing composition comprising the steps of subjecting the protein-containing composition to a protein-deamidase treatment and to high-pressure homogenization. The invention further concerns a plant-based protein-containing composition that can be obtained by the inventive method as well as the use of the plant-based protein-containing composition obtained by the inventive method as a food, a food additive, or a starting material for the production of food.

## BACKGROUND OF THE INVENTION

Food products and food additives showing a high protein content are highly desirable in the food industry due to their excellent functional and nutritional properties.

Apart from well-known nutritional benefits of high protein foods, protein functionalities in aqueous food systems mainly refer to emulsifying properties, foaming ability and gelling ability. The emulsifying ability is one of the most important functionalities of food proteins, since emulsions are commonly systems existing in various aqueous foods. Thereby, good protein solubility is an important precondition for good emulsifying, foaming and gelling properties.

However, many proteins occurring in food materials do not show sufficient solubility in aqueous foods, which significantly limits their use in food applications in terms of protein amounts as well as protein-derived functionalities.

Therefore, improvement of water solubility of these proteins is needed to extend the range of possible food applications.

Hence, there is a need for processing methods that are food grade, controllable, effective and specific in improving protein functionality. Moreover, methods are required that do not change the properties of other compounds in the protein-containing material in a non-favorable way.

Deamidation is one type of modification that can improve solubility and other functional properties of food proteins. Hydrolysis by deamidation can alter secondary and tertiary structure of proteins by removal of amide groups from glutamine and asparagine residues. During deamidation amide groups are converted into acid residues (carboxyl groups) with the subsequent release of ammonia. This leads to a decrease in the isoelectric point (pI) of the protein due to the increase in number of negatively charged carboxyl groups. As a consequence, deamidated proteins will be more soluble under weekly acidic conditions. Deamidation can be conducted both enzymatically and non-enzymatically (chemically). Enzymatic deamidation has several advantages over chemical methods, including mild reaction conditions, higher specificity and greater safety. Enzymes that have been used for protein deamidation include protease, peptide-glutaminase and protein-glutaminase (PG).

In WO 2014/123466 A1 a process is described, wherein deamidation is carried out for oat material to improve the solubility of oat protein.

EP 3437481 A1 relates to a production method of yoghurt, comprising adding a particular enzyme (PG) and starch.

However, there is still a need in the food industry for methods that allow for further improvement of the protein solubility to extend the range of possible applications. This particularly applies to proteins that show only very little solubility in aqueous foods by nature.

## SUMMARY OF THE INVENTION

In a first aspect, the invention to a method for the treatment of a plant-based protein-containing composition, the method comprising the steps of:

a) subjecting the protein-containing composition to a protein-deamidase treatment; and
b) subjecting the composition obtained in step a) to high-pressure homogenization.

In a second aspect, the invention relates to a plant-based protein-containing composition obtained by the method according to any of claims 1 to 10.

The invention furthermore a use of a plant-based protein-containing composition according to any of claims 11 to 14 as a food, a food additive, or a starting material for the production of food.

## DESCRIPTION OF THE FIGURES

**Figure 1** Process diagram for the treatment of soy flour

**Figure 2** Protein solubility of soy flour without enzymatic treatment and high-pressure homogenization (initial); protein solubility after enzymatic treatments only (PG+FoodPro CBL); protein solubility after high-pressure homogenization only (with homo); protein solubility after both enzymatic treatments and high-pressure homogenization (PG+ FoodPro CBL+homo).

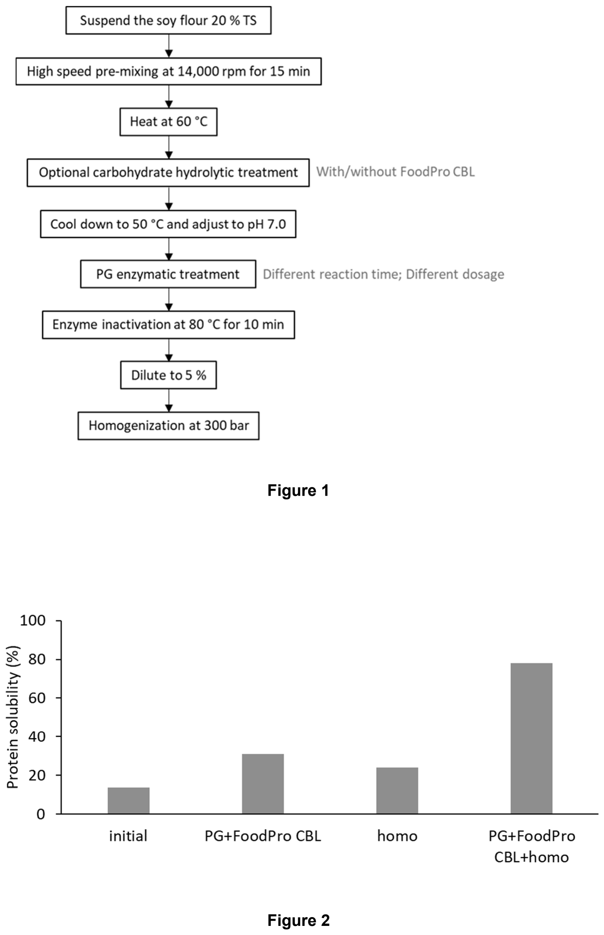

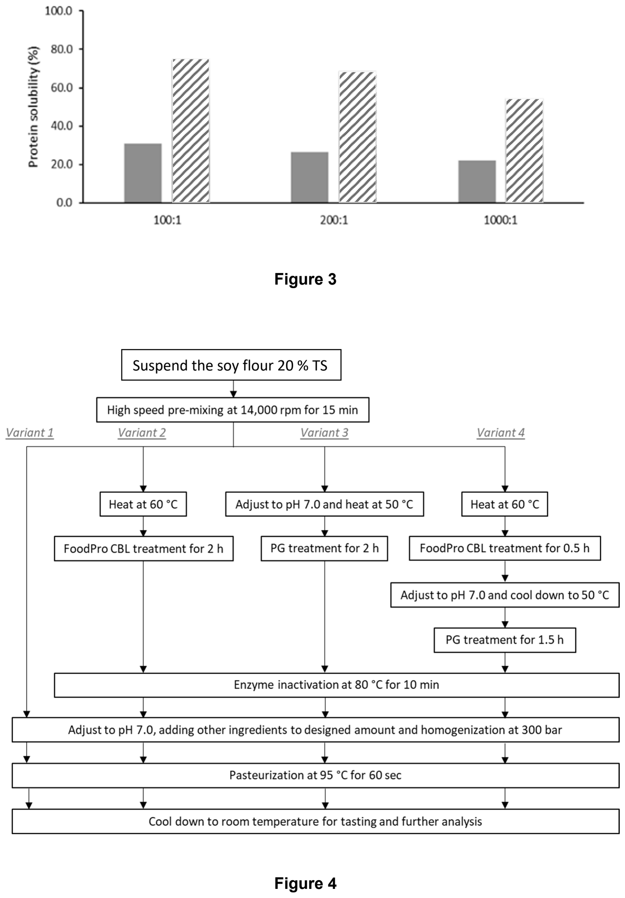

**Figure 3** Enzymatic treatment with soy flour: PG ratio of 100:1, left column - only enzymatic treatments have been carried out (PG+ FoodPro CBL), right column - both enzymatic treatments and high-pressure homogenization have been carried out (values correspond to Fig.2); Enzymatic treatment with soy flour: PG ratio of 200:1, left column - only enzymatic treatments have been carried out (PG+ FoodPro CBL), right column - both enzymatic treatments and high-pressure homogenization has been carried out; Enzymatic treatment with soy flour:PG ratio of 1000:1, left column - only enzymatic treatments have been carried out (PG+ FoodPro CBL), right column - both enzymatic treatments and high-pressure homogenization has been carried out.

**Figure 4** Process diagram for the treatment of four milk analogue variants.

**Figure 5** LUMiFuge transmission images for the milk analogue variants.

**Figure 6** Milk analogue variants after 24 h and 48 h

**Figure 7** The delta backscattering analyses of the milk analogue variants after 3 and 7 days.

**Figure 8** Foam height and liquid height for the milk analogue variants over a period of 1 hour.

**Figure 9** Scheme for sesame and sunflower press cakes is illustrated.

**Figure 10** The protein solubility in sesame press cake are shown.

## DESCRIPTION OF THE INVENTION

The invention relates to a method for the treatment of a plant-based protein-containing composition, the method comprising the steps of:

c) subjecting the protein-containing composition to a protein-deamidase treatment;
d) subjecting the composition obtained in step a) to high-pressure homogenization.

Under plant-based protein-containing composition is understood any plant-based or plant-derived composition that comprises proteins. The composition can be either a naturally occurring composition or a composition that has already been subjected to any form of food processing.

In a preferred embodiment of the method according to the invention the plant-based protein-containing composition is subjected to a carbohydrate-hydrolyzing enzyme in step a).

It is furthermore preferred that enzymes in step a) are added simultaneously or sequentially.

In a preferred embodiment, the plant-based protein-containing composition is selected from the group consisting of cocoa bean, coffee bean, kidney bean, bran, lupin, wheat, walnut, hemp, microalgae, soy, white rice, brown rice, pea, corn, potato, rapeseed, or any mixtures thereof.

In another preferred embodiment, the plant-based protein-containing composition is soy flour, or press cake, preferably peanut press cake. A press cake represents the solids remaining after pressing a protein-containing composition to remove its liquids, in general its fatty component. For instance, press cake is a by-product of the vegetable oil industry.

In a preferred embodiment, the plant-based protein-containing composition is food grade, i.e. the composition is suitable for human consumption. Therefore, the composition may not comprise ingredients that are not suitable for human consumption, such as e.g. toxic ingredients.

In the preferred embodiment the plant-based protein-containing composition comprises at least 10 wt.% of protein, more preferably 15 wt.% of protein, even more preferably at least 20 wt.% of protein, even more preferably at least 30 wt.% of protein and most preferably at least 40 wt.% of protein.

In another preferred embodiment, the plant-based protein-containing composition comprises from 10 to 90 wt.% of protein, more preferably from 20 to 60 wt.%, most preferably from 40 to 55 wt.%.

In another preferred embodiment, the plant-based protein-containing composition consists of protein.

Proteins are large biomolecules, or macromolecules, consisting of one or more long chains of amino acids. Proteins are considered to comprise at least 100 amino acids within one amino acid chain.

In a preferred embodiment, the protein in the plant-based protein-containing composition comprises high amounts of glutamine (GLN), preferably the glutamine content is at least 5 wt.%, more preferably at least 10 wt.%, even more preferably at least 12 wt.%, calculated on the basis of the total protein content.

In another preferred embodiment, the protein in the plant-based protein-containing composition comprises amounts of glutamine (GLN) from 5 to 30 wt.%, preferably from 12 to 22 wt.%, calculated on the basis of the total protein content.

In a preferred embodiment, the protein in the plant-based protein-containing composition comprises high amounts of asparagine (ASN), preferably the asparagine content is at least 5 wt.%, more preferably at least 10 wt.%, even more preferably 12 wt.%, calculated on the basis of the total protein content.

In another preferred embodiment, the protein in the plant-based protein-containing composition comprises amounts of asparagine (ASN) from 5 to 30 wt.%, preferably from 12 to 22 wt.%, calculated on the basis of the total protein content.

In a preferred embodiment, the protein in the plant-based protein-containing composition shows low solubility in water, preferably the solubility of the protein is less than 41 %, more preferably less than 20 %. The protein solubility is determined according to the following protocol:

The sample is diluted to 3 % (w/w) protein. The sample is centrifuged for 15 minutes at 3,000 g at ambient conditions. The wet sediment is quantified by decanting the supernatant. The Total Nitrogen (TN) content in the supernatant as well as in the initial solution is quantified by Kjeldahl combustion analysis. The protein solubility is calculated as follow:

$$\text{Protein Solubility [\%]} = (\text{TN of supernatant})/(\text{TN of initial solution}) \times 100$$

Proteins having a low protein solubility are particularly preferred in the context of the present invention, as they might benefit from the method according to the invention the most.

In a preferred embodiment, the inventive method results in an increased solubility of the protein in the protein-containing composition by a factor of at least 2, preferably by a factor of at least 5. The factor is calculated as the ratio of the protein solubility of the protein in the protein-containing composition before applying the inventive method and the protein solubility of the protein in the protein-containing composition after having applied the inventive method.

In another preferred embodiment, the inventive method results in an increased solubility of the protein in the protein-containing composition by a factor of from 1.5 to 10, preferably by a factor of from 2 to 6.

In a preferred embodiment, the protein-containing composition further comprises polysaccharides. Polysaccharides are long chains of carbohydrate molecules, specifically polymeric carbohydrates composed of monosaccharide units bound together by glycosidic linkages. Preferably the protein-containing composition comprises polysaccharides in amounts of from 10 to 50 wt.%, more preferably from 20 to 45 wt.%, based on the total weight of the protein-containing composition.

In a preferred embodiment, the plant-based protein-containing composition comprises vitamins. Vitamins may be selected from the group consisting of vitamin A, B, C, D, E, or any mixtures thereof.

In a preferred embodiment, the plant-based protein-containing composition comprises lipids. By definition, a lipid is soluble in nonpolar solvents. Preferably the protein-containing composition comprises lipids in amounts of from 1 to 10 wt.%, more preferably from 2 to 8 wt.%, based on the total weight of the protein-containing composition.

In a preferred embodiment, the plant-based protein-containing composition has a moisture content of from 0.5 to 10 wt.%, preferably of from 2 to 6 wt.%.

According to the invention, the protein-containing composition is subjected to a protein-deamidase treatment.

Depending on the specific enzyme used, different parameters have to be applied to carry out the enzymatic treatment, such as e.g. the pH-value. Further parameters and how these parameters have to be adapted are well-known to a skilled person.

Treatment with a protein-deamidase (deamidation) can improve solubility and other functional properties of proteins. Hydrolysis by deamidation can alter secondary and tertiary structure of proteins by removal of amide groups from glutamine and asparagine residues. During deamidation amide groups are converted into acid residues (carboxyl groups) with the subsequent release of ammonia. This leads to a decrease in the isoelectric point (pI) of the protein due to the increase in number of negatively charged carboxyl groups. As a consequence, deamidated proteins will be more soluble under weak acidic conditions. Enzymatic deamidation has several advantages over chemical methods, including mild reaction conditions, higher specificity and greater safety.

In a preferred embodiment, the protein-deamidase is selected from the group consisting of protein-asparaginase (PA), protein-glutaminase (PG), or any mixtures thereof. Preferably, the protein-deamidase is protein-glutaminase (PG).

Protein-asparaginase (PA) is an enzyme that catalyzes the hydrolysis of asparagine to aspartic acid while releasing ammonia.

Protein-glutaminase (PG) is an amidohydrolase enzyme that generates glutamate from glutamine within a protein (amino acid chain) while releasing ammonia. In case deamidation is carried out with protein-glutaminase (PG), the enzymatic treatment is preferably carried out at a pH value of from 6.8 to 7.5, and preferably at a temperature of from 40 to 50 °C.

In a preferred embodiment, the ratio of plant-based protein-containing composition to protein-deamidase is from 50:1 to 2000:1 based on weight (w/w), more preferably from 100:1 to 1000:1 (w/w), most preferably the ratio is 100:1 (w/w).

In a preferred embodiment, 0.25-5 U protein-deamidase is used per g plant-based protein-containing composition during protein-deamidase treatment. The unit "U" refers to the enzyme unit. Preferably, 0.5 U protein-deamidase per g plant-based protein-containing composition is equal to a ratio of plant-based protein-containing composition to protein-deamidase of 1000:1, 2.5 U protein-deamidase per g plant-based protein-containing composition is equal to a ratio of plant-based protein-containing composition to protein-deamidase of 200:1, and 5 U protein-deamidase per g plant-based protein-containing composition is equal to a ratio of plant-based protein-containing composition to protein-deamidase of 100:1.

According to the invention, the plant-based protein-containing composition is subjected to a high pressure-homogenization (step b) after protein-deamidase treatment (step a).

High pressure-homogenization in the context of the present invention has to be understood as pressure-homogenization at a pressure of at least 50 bar.

Without intention to be bound by theory, it is assumed that high-pressure homogenization has a disruptive effect on the tertiary and quaternary structure of proteins via cleavage of non-covalent bonds, which likewise leads to improved solubility of the proteins. Therefore, it is assumed that high-pressure homogenization is particularly effective for proteins showing pronounced quaternary structures, such as globular proteins (e.g. soy protein).

For high-pressure homogenization, any high-pressure homogenizer can be used. For example, a GEA Italy (ex GEA Niro Soavi) Panda Plus 200 can be used.

In a preferred embodiment, high-pressure homogenization is performed at a pressure of from 100 bar to 600 bar, more preferably from 200 to 500 bar, most preferably from 270 to 330 bar.

In another preferred embodiment, high-pressure homogenization is performed at a pressure of at least 50 bar, more preferably the pressure is at least 100 bar, even more preferably the pressure is at least 200 bar, even more preferably the pressure is at least 250 bar and most preferably the pressure is at least 250 bar.

In a particular embodiment, high-pressure homogenization is performed at a pressure of 300 bar.

In a preferred embodiment of the inventive method, the method comprises a further enzymatic treatment that includes the treatment with a carbohydrate-hydrolyzing enzyme, preferably wherein the carbohydrate-hydrolyzing enzyme is a cellulase, such as commercially available "FoodPro CBL". The further enzymatic treatment represents another enzymatic treatment that is independent from the aforementioned protein-deamidase treatment according to step a).

A carbohydrate-hydrolyzing enzyme is to be understood as an enzyme capable of hydrolyzing polysaccharides into smaller saccharide fragments. Polysaccharides are long chains of carbohydrate molecules, specifically polymeric carbohydrates composed of at least eleven monosaccharide units bound together by glycosidic linkages.

A cellulase is an enzyme that catalyzes the decomposition of cellulose and related polysaccharides.

In case the plant-based protein-containing composition comprises carbohydrates (polysaccharides), the treatment with a carbohydrate-hydrolyzing enzyme enables the modification of functional properties of the protein-containing composition as a whole.

In a preferred embodiment, the ratio of protein-containing composition and carbohydrate-hydrolyzing enzyme is between 2000:1 to 500:1 (w/w), more preferably between 1000:1 and 750:1 (w/w).

In a preferred embodiment, the further enzymatic treatment with a carbohydrate-hydrolyzing enzyme is carried out before the protein-deamidase treatment in step a).

In another preferred embodiment, the further enzymatic treatment with a carbohydrate-hydrolyzing enzyme is carried out simultaneously with the protein-deamidase treatment in step a).

In another preferred embodiment, the further enzymatic treatment with a carbohydrate-hydrolyzing enzyme is carried out after the protein-deamidase treatment in step a).

In a preferred embodiment, the method according to the present invention comprises the following steps:

a) Mixing the plant-based protein-containing composition with an aqueous medium;
b) Subjecting the plant-based protein-containing composition obtained in step a) to a protein-deamidase treatment and preferably also a carbohydrate-hydrolyzing enzymatic treatment.
c) Subjecting the composition obtained in step b) to high-pressure homogenization.

In said embodiment, the protein-deamidase treatment mentioned in step b) corresponds to the protein-deamidase treatment as given under step a) above, i.e. said step refers to the enzymatic treatment with a protein-deamidase.

Preferably, the aqueous medium in step a) of this embodiment is an aqueous solution, more preferably the aqueous medium is water. The protein-containing composition is preferably mixed with the aqueous medium to a total solid (TS) content of between 5 to 30 % (w/w), more preferably to a total solid (TS) content of between 10 and 20 % (w/w).

Another aspect of the present inventions concerns a plant-based protein-containing composition obtained by the method according to the invention.

As mentioned above, the individual method steps of the method according to the invention result in distinct modifications of the protein-containing composition used. In particular, the protein-deamidase treatment combined with the high-pressure homogenization step results in distinct modifications of the protein being present in the protein-containing composition (changes involving covalent bonds, and changes as to the tertiary and quaternary protein structure). These modifications would not be obtained if none or only one of the aforementioned steps would be applied to the plant-based protein-containing composition.

In a preferred embodiment, the plant-based protein-containing composition is a milk analogue. A milk analogue is understood as a liquid that is used as replacement for the milk from a mammal (mainly cows). Preferably, a milk analogue has a viscosity of about 2 mPa s when measured at shear rate of 100 s$^{-1}$ and at a temperature of 20 °C.

In a preferred embodiment, the protein in the plant-based protein-containing composition has a solubility of at least 42 %, more preferably the solubility is at least 50 %, 60 %, 70 %, 80 %, or 90 %.

In another preferred embodiment, the protein in the plant-based protein-containing composition has a solubility of from 42 % to 100 %, preferably from 50 % to 95 %, more preferably from 70 % to 90 %.

For the determination of the solubility, the protocol as described above has to be followed.

In another preferred embodiment, the plant-based protein-containing composition has a shear viscosity of from 50 mPas to 70 mPas, preferably from 55 mPas to 65 mPas, when measured at a shear rate of 100 s-1 and at a temperature of 25 °C. The shear viscosity can be measured by any kind of rheometer known to a person skilled in the art. For example, a Thermo Haake Germany, Haake RS6000 coupled with UMTC thermo controller can be used.

In a preferred embodiment, the plant-based protein-containing composition has a volumetric diameter D(v)90 value of from 80 to 100 $\mu$m, more preferably from 85 to 95 $\mu$m.

In a preferred embodiment, the plant-based protein-containing composition is an emulsion. An emulsion in the context of the present invention is to be understood as a mixture of two lipids that are immiscible due to their different polarities (hydrophobic vs. hydrophilic). In an emulsion, one liquid (dispersed or internal phase) is generally dispersed in another liquid (external or continuous phase). Preferably, the non-polar phase is dispersed within the polar-phase. Preferably, the emulsion has an emulsion instability index of from 0.035 to 0.050.

Another aspect of the invention relates to the use the plant-based protein-containing composition according to the invention as a food, a food additive, or a starting material for the production of food. Thereby, the plant-based protein-containing composition according to the invention can directly be used as a nutritional food product or it can be added to complement other nutritional products, or it can be used as basis for the production of nutritional products.

Another aspect of the invention relates to a method of manufacturing a food product comprising:

(1) Manufacturing a plant-based protein-containing composition according to the invention;
(2) Spray drying the composition obtained in step (1);
(3) Dry mixing 2) the composition obtained in step (2) with dry powder ingredient(s).

**EXAMPLES**

Example 1

Example 1 exemplarily depicts a treatment scheme for soy flour. The scheme is illustrated in Figure 1 (Fig.1).

The soy flour used in this Example had the following specifications:

- dehulled soy flour
- protein content of 42.6 wt.%;
- fiber content of 5.0 wt.%;
- available carbohydrate content of 22.1 wt.%;
- lipid content of 19 wt.%;
- moisture content of 4.1 wt.%.

In a first step, the soy flour has been suspended in water to a total solid (TS) content of 20 wt.%. Then the suspension has been pre-mixed at high speed at 14.000 rpm for 15 min. Afterwards, the suspension has been heated at 60 °C. Thereupon, carbohydrate hydrolytic treatment has been performed using FoodPro CBL (from DuPont, cellulase) for 1-2 hours. Afterwards, the pH was adjusted to pH=7.0 for the subsequent 2 hours-treatment with protein-glutaminase (PG; ratio soy flour to PG, 100:1 (w/w) corresponding to 5 U PG per g soy flour). After inactivation of PG at 80 °C and dilution, the enzyme-treated composition has been subjected to high-pressure homogenization at 300 bar. For high-pressure homogenization, a GEA Italy (ex GEA Niro Soavi) Panda Plus 200 has been used. The following settings have been used: pressure, 250 bar at 1$^{st}$ stage and 50 bar at 2$^{nd}$ stage; temperature, 50 °C, 1 run.

Likewise, comparative experiments have been carried out, wherein either only enzymatic treatments or only high-pressure homogenization has been performed in order to study the impact of the individual treatments on the protein solubility of soy flour protein. Protein solubility has been measured according to the following protocol:

All samples were diluted to 3 % (w/w) protein. The samples were centrifuged for 15 min at 3,000 g at ambient conditions (temperature and pressure). The wet sediment was quantified by decanting the supernatant. The Total Nitrogen content in the supernatant as well as in the initial solution was quantified by Kjeldahl combustion analysis. The protein solubility was calculated as follows: Protein solubility [%] = (TN of supernatant)/(TN of initial solution)$\times$100. The results are shown in Figure 2 (Fig. 2).

As can be observed from Fig. 2, initial protein solubility in soy flour has been very low at a level of 14 % (initial). Having applied enzymatic treatments, both with protein-glutaminase and FoodPro CBL, the protein solubility could be improved to a level of 31 % (PG+FoodPro CBL). When only high-pressure homogenization has been applied, the protein solubility could be improved from 14 % (initial) to 24 % (with homo). Surprisingly, a much higher protein solubility could be achieved when enzymatic treatments and high-pressure homogenization have been combined, which resulted in an improvement from 14 % (initial) to 78 % (PG+FoodPro CBL +homo). Therefore, it has been found that the combined application of both enzymatic treatments and high-pressure homogenization leads to an improvement with regard to protein solubility that is much higher than what might have been expected based on the results of the individual aforementioned treatments, i.e. applying only enzymatic treatments (PG+FoodPro CBL) or only high-pressure homogenization (with homo). Hence, these data provide evidence that there is a synergistic effect between PG treatment and post-homogenization.

In order to study the influence of the soy flour to PG ratio (w/w), apart from the experiment mentioned above, the same experiments have been carried out, wherein the soy flour to PG ratio has been changed from 100:1 to 200:1 (equal to 2.5 U PG per g soy flour) and 1000:1 (equal to 0.5 U PG per g soy flour), respectively. The results are shown in Figure 3 (Fig. 3).

As already shown in Fig. 2, it can be observed from Fig. 3 (ratio 100:1) that enzymatic treatments lead to a protein solubility of 31 % (PG+FoodPro CBL), whereas enzymatic treatments and high-pressure homogenization leads to a solubility of even 78 %. It has already been shown in Fig. 2 that high-pressure homogenization alone led to a protein solubility of 24 %.

It can further be observed in Fig. 3 that at a ratio of 200:1 enzymatic treatments lead to a protein solubility of 26 % (PG+FoodPro CBL), whereas enzymatic treatments and high-pressure homogenization lead to a solubility of 69 %. It has already been shown in Fig. 2 that high-pressure homogenization alone led to a protein solubility of 24 %. Therefore, synergistic effects also have been observed at a ratio of 200:1, although the effect was less pronounced compared to the ratio of 100:1.

Similar observations have been made for a ratio of 1000:1. It can be observed in Fig. 3 that at a ratio of 1000:1 enzymatic treatments lead to a protein solubility of 22 % (PG+FoodPro CBL), whereas enzymatic treatments and high-pressure homogenization leads to a solubility of 54 %. It has already been shown in Fig. 2 that high-pressure homogenization alone led to a protein solubility of 24 %. Therefore, synergistic effects also have been observed at a ratio of 1000:1, although the effect was less pronounced compared to the ratios of 100:1 and 200:1, respectively.

Example 2

Example 2 depicts the production of a milk analogue based on soy flour using the method according to the invention and comparative methods. The experimental trials that have been carried out are summarized in Figure 4 (Fig.4).

As can be observed from Fig. 4, variant 1 represents a comparative example, wherein no enzymatic treatment has been performed. Similarly, variant 2 represents a comparative example, wherein an enzymatic treatment has been performed with only a carbohydrate-hydrolyzing enzyme (FoodPro CBL). Variant 3 and 4, respectively, have been produced according to the method of the invention, wherein for variant 3 the enzymatic treatments has been carried out with protein-glutaminase (PG) only, whereas for variant 4, an additional enzymatic treatment has been performed with a carbohydrate-hydrolysing enzyme (FoodPro CBL).

All variants 1 to 4 (according to the invention and comparative) have been assessed with regard to their initial pH, protein solubility, D(v)90 value, and viscosity after heat treatment. The results are summarized in Table 1 below.

Table 1: The intial pH, solubility, D(v)90 before and after heating, and viscosity of the milk analogue variants.

| Variants | Initial pH | Solubility | D90 before heat treatment | D90 after heat treatment | Viscosity at 100 s$^{-1}$ after heat treatment |
|---|---|---|---|---|---|
| 1) w/o enzyme | 6.47 | 24 % | 73 $\mu$m | 93 $\mu$m | 31 mPa·s |
| 2) FoodPro CBL 2 h | 6.32 | 27 % | 78 $\mu$m | 123 $\mu$m | 20 mPa·s |
| 3) PG 2 h | 6.43 | 59 % | 95 $\mu$m | 90 $\mu$m | 62 mPa·s |
| 4) FoodPro CBL+PG | 6.43 | 57 % | 87 $\mu$m | 94 $\mu$m | 59 mPa·s |

From Table 1 it can be observed that the initial pH of the four variants was very similar. The protein solubility of the samples increased from 24 % to 59 % by PG treatment. For the particle size distribution (PSD), the variants with PG treatment showed higher D(v)90 values before the heat treatment than the other two variants. However, this difference was lost after the heat treatment, except for the variant that has only been treated with FoodPro CBL (variant 2). In addition, large differences with regard to the viscosities have been observed among the variants. The variants with PG treatment showed a much higher viscosity compared to the variants without PG treatment. After FoodPro CBL treatment, the viscosity of the variant (variant 2) decreased around 30 %, indicating that the high viscosity was due to the fiber present in soy flour. For variants with PG treatment (variant 3 and 4), the viscosity was two times higher than that of the variants without PG (variant 1 and 2). This indicates improved protein solubilization for variant 3 and 4.

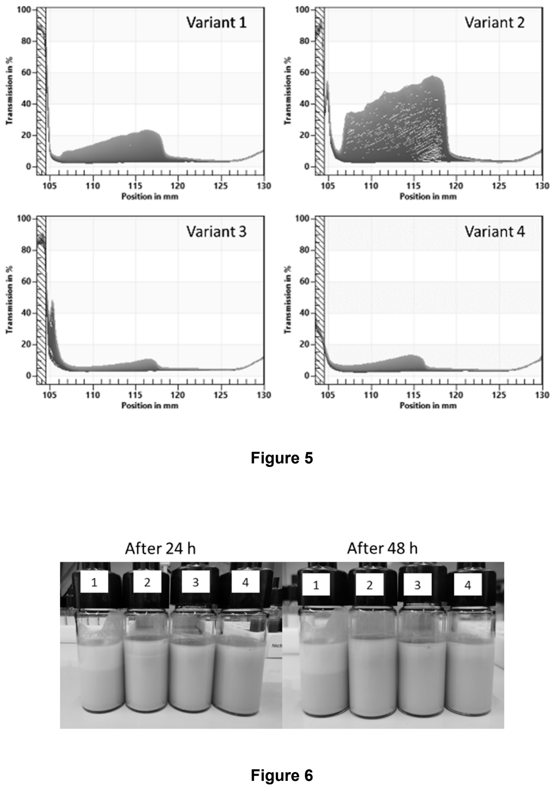

Moreover, in order to illustrate the differences in the techno-functional properties between the milk analogue variants, their emulsion and foaming properties were evaluated. For this purpose, emulsion stability analysis using LUMiFuge has been carried out. The results are shown in Figure 5 (Fig. 5) below.

Moreover, pictures of the four variants after 24 h and 48 h, respectively, are shown in Figure 6 (Fig. 6).

High transmission values shown in the LUMiFuge transmission images (Fig. 5) indicate low emulsion stability.

Based on Figures 5 and 6, it can be observed that variant 2 has the lowest emulsion stability. As the FoodPro CBL treatment decreased the viscosity of the respective variant (see Table 1), a higher risk for creaming for the emulsion occurred. The variants 3 and 4, which were treated with PG, showed much higher emulsion stability than variants 1 and 2, due to improved protein solubilization. The negative impact from FoodPro CBL on the emulsion stability could also be counteracted by PG treatment. Despite the partly negative influence of the FoodPro CBL treatment, the advantage of FoodPro CBL treatment is that the PG induced viscosity increase can be controlled.

The emulsion instability indexes for the four variants were calculated 14 hours after the online transmission analysis. The results are shown in Table 2. The results indicate that the emulsion stability increased around 54 % by PG treatment.

Table 2: The emulsion instability indexes for the milk analogue variants.

| Variants | Emulsion instability index |
|---|---|
| 1) w/o enzyme | 0.087 |
| 2) FoodPro CBL (2 h) | 0.251 |
| 3) PG (2 h) | 0.043 |
| 4) FoodPro CBL+PG | 0.040 |

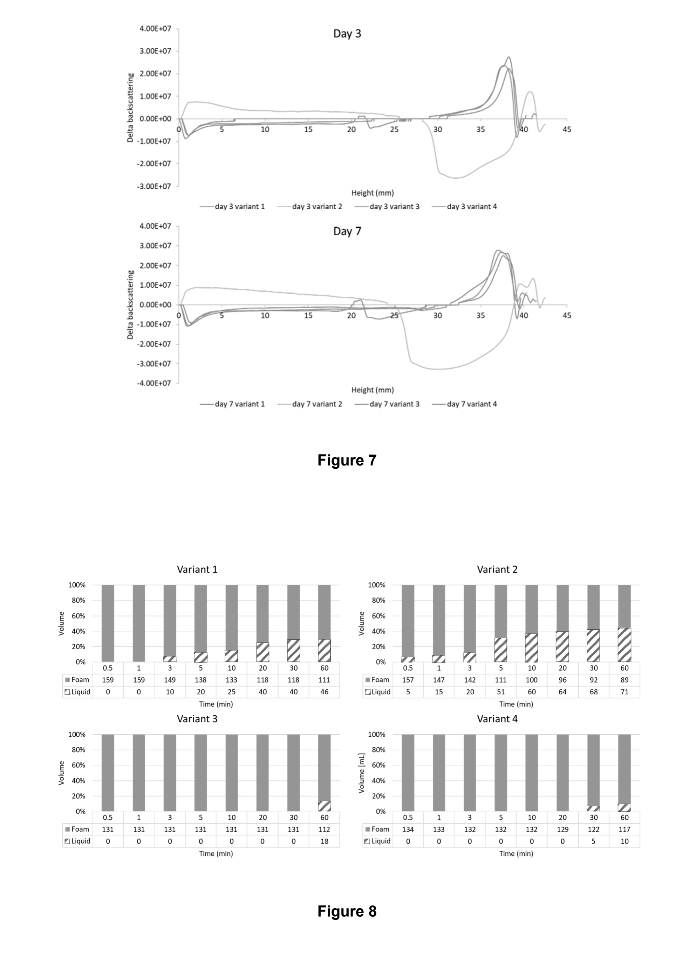

After 48 h, the variants were left on a lab bench over 7 days and were measured by TurbiScan at a time interval. The delta backscattering results of day 3 and day 7 are shown in Figure 7. The results gave similar results as the LUMiFuge transmission images.

The foaming properties, the foamability, the overrun and the foam stability of the four variants are shown in Table 3 below.

Table 3. Foamability, overrun and foam stability of the milk analogue variants.

| Variants | Foamability (mL) | Overrum (%) | Foam stability (%) |
|---|---|---|---|
| 1) w/o enzyme | 159 | 59 | 70 |
| 2) FoodPro CBL 2 h | 157 | 62 | 57 |
| 3) PG 2 h | 131 | 31 | 85 |

(continued)

| Variants | Foamability (mL) | Overrum (%) | Foam stability (%) |
|---|---|---|---|
| 4) FoodPro CBL+PG | 134 | 34 | 87 |

The data in Table 3 indicate that on the one hand, PG treatment decreased the foamability, but on the other hand, improved the foam stability. The relative foam height and liquid height for the four variants over 1 hour are shown in Figure 8.

From Figure 8 it can be concluded that the variants treated with PG (variant 3 and 4) show improved foam stability compared to the variants that have not been treated with PG (variant 1 and 2).

Example 3

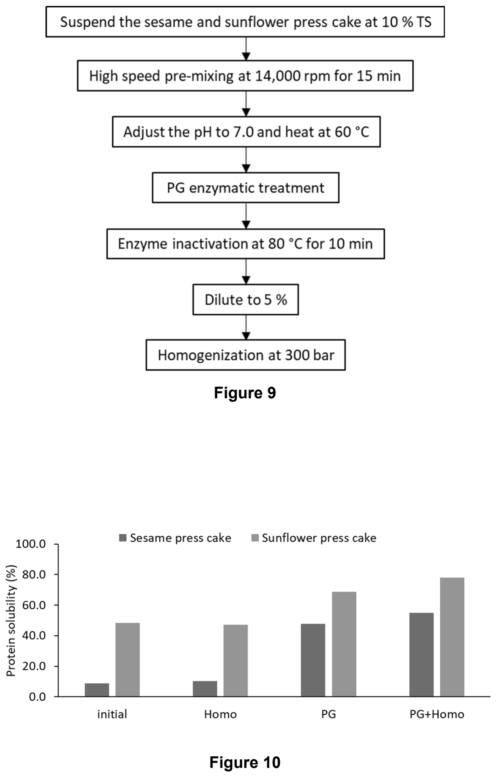

Example 3 depicts a treatment scheme for sesame and sunflower press cakes. The scheme is illustrated in Figure 9 (Fig.9).

The sesame press cake used in this Example had the following specifications:

- protein content of 39.8 wt.%;
- fiber content of 23.3 wt.%;
- available carbohydrate content of 8.5 wt.%;
- lipid content of 11.7 wt.%;
- a maximum moisture content of 12 wt.%.

The sunflower press cake used in this Example had the following specifications:

- protein content of 48.6 wt.%;
- fiber content of 15.2 wt.%;
- available carbohydrate content of 13.2 wt.%;
- lipid content of 9.4 wt.%;
- a maximum moisture content of 12 wt.%.

In a first step, the soy flour has been suspended in water to a total solid (TS) content of 10 wt.%. Then the suspension has been pre-mixed at high speed at 14.000 rpm for 15 min. Afterwards, the suspension has been heated at 60 °C. Thereupon, the pH was adjusted to pH=7.0 for the subsequent 2 hours-treatment with protein-glutaminase (PG; ratio soy flour to PG, 500:1 (w/w) corresponding to 1 U PG per g sesame or sunflower press cake). After inactivation of PG at 80 °C and dilution, the enzyme-treated composition has been subjected to high-pressure homogenization at 300 bar. For high-pressure homogenization, a GEA Italy (ex GEA Niro Soavi) Panda Plus 200 has been used. The following settings have been used: pressure, 250 bar at $1^{st}$ stage and 50 bar at $2^{nd}$ stage; temperature, 50 °C,1 run.

Likewise, comparative experiments have been carried out, wherein either only enzymatic treatment or only high-pressure homogenization has been performed in order to study the impact of the individual treatments on the protein solubility of sesame and sunflower press cakes. Protein solubility has been measured according to the following protocol: All samples were diluted to 3 % (w/w) protein. The samples were centrifuged for 15 min at 3,000 g at ambient conditions (temperature and pressure). The wet sediment was quantified by decanting the supernatant. The Total Nitrogen content in the supernatant as well as in the initial solution was quantified by Kjeldahl combustion analysis. The protein solubility was calculated as follows: Protein solubility [%] = (TN of supernatant)/(TN of initial solution)$^x$ 100. The results are shown in Figure 10 (Fig. 10).

As can be observed from Fig. 10, initial protein solubility in sesame press cake has been very low at a level of 9 % (initial). When only high-pressure homogenization has been applied, the protein solubility almost has no change (Homo). Having only applied enzymatic treatment using protein glutaminase, the protein solubility could be improved to a level of 48 % (PG). Similarly as the soy flour, a much higher protein solubility could be achieved when enzymatic treatment and high-pressure homogenization have been combined, which resulted in an improvement from 9 % (initial) to 55 % (PG+homo). Therefore, it has been found that the combined application of both enzymatic treatment and high-pressure homogenization leads to an particular improvement with regard to protein solubility that is much higher than what might have been expected based on the results of the individual aforementioned treatments, i.e. applying only enzymatic treatments (PG) or only high-pressure homogenization (Homo). Hence, these data provide evidence that there is a synergistic effect between PG treatment and post-homogenization.

Similar results have been found for sunflower press cake. The initial protein solubility in sunflower press cake has been at a level of 48 % (initial). When only high-pressure homogenization has been applied, the protein solubility has no change, which was also at a level of 48 % (Homo). Having only applied enzymatic treatment using protein glutaminase, the protein solubility was improved to a level of 69 % (PG). A much higher protein solubility was achieved when enzymatic treatment and high-pressure homogenization have been combined, which resulted in an improvement from 48 % (initial) to 78 % (PG+homo). Therefore, it has been found that the combined application of both enzymatic treatments and high-pressure homogenization leads to an improvement with regard to protein solubility that is much higher than what might have been expected based on the results of the individual treatments. Hence, these data again provide evidence that there is a synergistic effect between PG treatment and post-homogenization.

**Claims**

1. A method of manufacturing a food product comprising

   (1) Manufacturing a plant-based protein-containing composition, by:

      a) Mixing a plant-based protein-containing composition with an aqueous medium;
      b) Subjecting the plant-based protein-containing composition obtained in step a) to a protein-deamidase treatment;
      c) Subjecting the composition obtained in step b) to high-pressure homogenization,

   (2) Spray drying the composition obtained in step (1);
   (3) Dry mixing the composition obtained in step (2) with dry powder ingredient(s).

2. A method of manufacturing a food product according to claim 1, wherein the plant-based protein-containing composition is also subjected to a carbohydrate-hydrolyzing enzyme in step b).

3. The method according to claim 1 or 2, wherein enzymes in step b) are added simultaneously or sequentially.

4. The method according to any of the preceding claims, wherein the protein-deamidase is protein-glutaminase.

5. The method according to any of the preceding claims, wherein the ratio of protein-containing composition to protein-deamidase is from 50:1 to 2000:1 (w/w), preferably from 100:1 to 1000:1 (w/w), more preferably the ratio is 100:1 (w/w).

6. The method according to any of the preceding claims, wherein the protein-containing composition is soy flour or press cake, preferably peanut press cake.

7. The method according to any of the preceding claims, wherein high-pressure homogenization is performed at a pressure of from 100 to 600 bar, preferably of from 200 to 500 bar, more preferably from 270 to 330 bar.

8. The method according to any of the preceding claims, wherein the carbohydrate-hydrolyzing enzyme is a cellulase.

9. The method according to claim 2, wherein the further enzymatic treatment with a carbohydrate-hydrolyzing enzyme is carried out before the enzymatic treatment in step b).

10. The method according to claim 2, wherein the further enzymatic treatment with a carbohydrate-hydrolyzing enzyme is carried out simultaneously with the protein-deamidase treatment in step b).

11. The method according to any of the preceding claims, wherein the protein in the plant-based protein-containing composition has a solubility of less than 41 %.

12. The method according to any of the preceding claims, wherein the protein in the plant-based protein-containing composition comprises at least 40 wt.% of protein, preferably from 40 to 55 wt.% of protein.

13. The method according to any of the preceding claims, wherein the plant-based protein-containing composition is a milk analogue.

**14.** The method according to any of the preceding claims, wherein 0.25-5 U protein-deamidase is used per g of plant-based protein-containing composition during protein-deamidase treatment.

**15.** The method according to anyone of claims 2 to 14, wherein the ratio of protein-containing composition and carbohydrate-hydrolyzing enzyme is between 2000:1 to 500:1 (w/w), more preferably between 1000:1 and 750:1 (w/w).

**Figure 1**

**Figure 2**

**Figure 3**

**Figure 4**

Figure 5

Figure 6

**Figure 7**

**Figure 8**

Suspend the sesame and sunflower press cake at 10 % TS

High speed pre-mixing at 14,000 rpm for 15 min

Adjust the pH to 7.0 and heat at 60 °C

PG enzymatic treatment

Enzyme inactivation at 80 °C for 10 min

Dilute to 5 %

Homogenization at 300 bar

**Figure 9**

**Figure 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014123466 A1

- EP 3437481 A1